# EUROPÄISCHE PATENTSCHRIFT

(11) **EP 0 872 385 B1**
(45) Veröffentlichungstag und Bekanntmachung des Hinweises auf die Patenterteilung: **29.06.2005**
(21) Anmeldenummer: 98106228.4
(22) Anmeldetag: 06.04.1998
(51) Int. Cl.: B60R 16/02

(54) **Datenbus für Fahrzeuge mit mehreren Teilnehmern**
Data bus with several participants
Bus de données avec plusieurs participants

(30) Priorität: 16.04.1997 DE 19715810
(43) Veröffentlichungstag der Anmeldung: 21.10.1998
(73) Patentinhaber: Bayerische Motoren Werke Aktiengesellschaft, 80788 München (DE)
(72) Erfinder: Griessbach, Robert, 83629 Weyarn (DE); Bachmaier, Peter, 85777 Fahrenzhausen (DE)

(56) Entgegenhaltungen:
- EP-A- 0 580 016
- US-A- 4 561 091
- US-A- 4 700 344
- US-A- 4 942 571
- US-A- 5 515 361

## Beschreibung

Die Erfindung bezieht sich auf einen Datenbus mit mehreren Teilnehmern, die über periphere SIE-Module und eine optische übertragungsstreeke auf einen als Sternkoppler ausgebildeten Zentralbus arbeiten.

Bei einem derartigen Datenbus kann es vorkommen, dass die peripheren S/E-Module ein Dauer-Lichtsignal aussenden. Ursache kann eine äußere Einwirkung, beispielsweise durch einen Unfall oder aber auch ein interner Fehler sein. Da S/E-Busmodule im Sternkoppler allenfalls eine geringe Intelligenz besitzen und lediglich das vom peripheren Modul eingehende Lichtsignal in ein entsprechendes elektrisches oder optisches Steuersignal umsetzen und an die anderen Busmodule weitergeben, führt dies zu einem völligen Blockieren des Datenbusses. Sämtliche Busmodule erhalten dann ebenfalls ein Dauer-Steuersignal. Da sich die Busmodule und die peripheren Module in ihrem grundsätzlichen Aufbau nicht unterscheiden, schalten sie den mit dem zugehörigen Busmodul verbundenen Eingang dann ab. Der Bus ist dann nicht mehr arbeitsfähig.

Aus der US 4,700,344 ist ein Datenbus vergleichbar der eingangs genannten Art bekannt, der darüber hinaus folgende Merkmale besitzt:

Die Teilnehmer arbeiten über eine Übertragungsstrecke auf den Zentralbus, der die eingehenden signale an die anderen Teilnehmer weitergibt. Mit Hilfe eines im Zentralbus für jeden Teilnehmer vorgesehenen Zählers wird ein Auftreten eines Dauersignals auf der zugehörigen Übertragungsstrecke mit einer Zeitdauer, die größer als die maximal zulässige Signallänge ist, erkannt und der Teilnehmer vom Zentralbus abgeschaltet. Das besondere Problem, den Teilnehmer wieder anzuschalten, wenn er kein Dauersignal mehr aussendet, wird dabei durch einen zusätzlichen Zähler für die Länge des signals gelöst, der bei Ausbleiben des Dauersignals den Teilnehmer wieder an den Sternkoppler anschaltet. Der Erfindung liegt die Aufgabe zugrunde, einen Datenbus der eingangs genannten Art zu schaffen, der im Fehlerfall zumindest eingeschränkt arbeitsfähig bleibt.

Die Erfindung löst diese Aufgabe durch die Merkmale des Patentanspruchs 1.

Tritt der beschriebene Störfall auf, so schaltet das jeweilige S/E-Busmodul das zugehörige periphere S/E-Modul ab. Bis auf dieses periphere S/E-Modul bleibt der gesamte Datenbus dann arbeitsfähig.

Da die S/E-Busmodule, wie bereits ausgeführt, das eingehende Dauer-Lichtsignal als Dauer-Lichtsignal an ihre peripheren S/E-Module weitergeben, kann dann, bedingt durch Bauteiltoleranzen, der Fall eintreten, dass sich ein an sich intaktes peripheres SIE-Modul abschaltet, noch bevor die Störquelle in Form eines defekten peripheren S/E-Moduls durch das zugeordnete Busmodul abgeschaltet ist. Um auch in diesem Fall die Arbeitsfähigkeit des Busses zumindest in dem Umfang wiederherzustellen, wie dies möglich ist, d. h. lediglich das defekte periphere S/E-Modul bleibend abzuschalten, ist in diesem Fall eine Wiedereinschaltroutine der intakten peripheren S/E-Module vorgesehen.

Hierzu ist innerhalb des Bussystems ein Busmaster vorgesehen, der in zeitlich regelmäßigen Abständen Synchronisationspulse aussendet. Die Funktion des Busmasters kann durch ein separates Bauteil oder aber auch z. B. durch ein S/E-Busmodul übernommen werden. Das defekte, periphere S/E-Modul bleibt solange abgeschaltet, wie es ein Dauer-Lichtsignal aussendet. Die anderen SIE-Module schalten sich wieder ein, wenn sie einen Synchronisationspuls erhalten.

In diesem Fall liegt weder ein Lichtsignal noch ein Steuersignal mit einer Zeitdauer an, die größer als die maximal zulässige Signallänge ist. Dieses Aktivieren kann auch selbsttätig durch eine im S/E-Busmodul vorgesehene interne Logik ausgelöst werden. Das Wiederinbetriebnehmen kann somit erfolgen, wenn die Störung im S/E-Modul selbst beseitigt ist und dieses kein Dauer-Lichtsignal mehr aussendet oder aber wenn die Störung in einem anderen SIE-Modul beseitigt ist und das zugehörige S/E-Busmodul kein Dauer-Steuersignal mehr erhält. Auf diese Weise ist sichergestellt, dass der Bus zumindest in dem Umfang reaktiviert wird, wie dies möglich ist. Diese Reaktivierung ist stets beschränkt auf die Umfänge, die funktionsfähig sind.

Anhand der Zeichnung ist die Erfindung weiter erläutert. Es zeigen:
Fig. 1 schematisch den Aufbau eines erfindungsgemäßen Datenbusses und
Fig. 2 eine Einzelheit dieses Datenbusses.

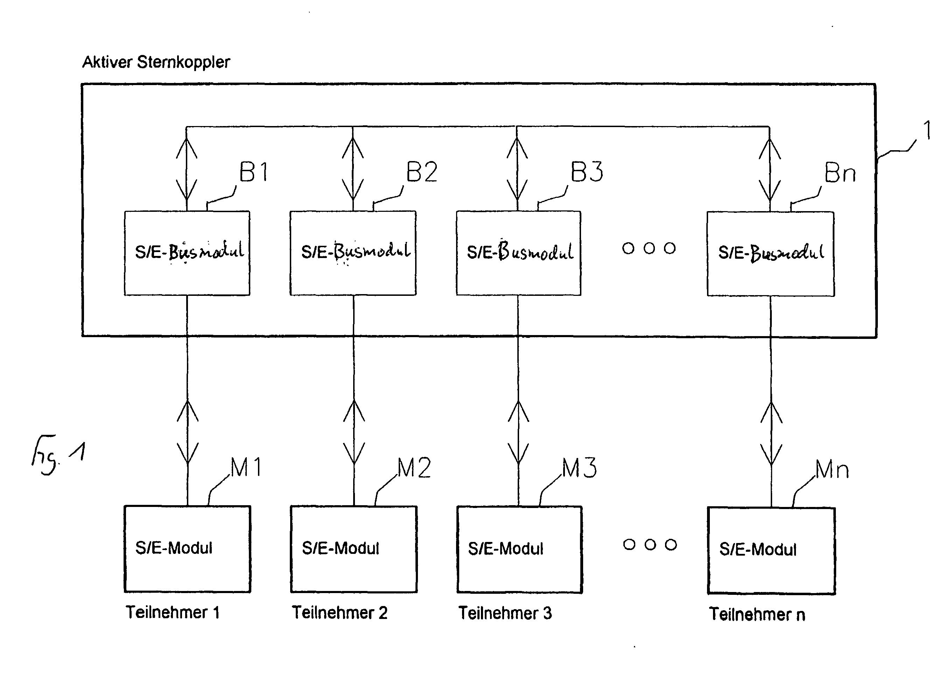

Der in Fig.1 dargestellte Datenbus besitzt in einem aktiven Sternkoppler 1 miteinander verbunden eine Reihe von S/E-Busmodulen B1, B2, ..., Bn. Jedem der Busmodule ist ein peripheres S/E-Modul M1, M2, ... , Mn zugeordnet, über die nicht im einzelnen dargestellte Teilnehmer 1, 2, 3, ... miteinander Informationen austauschen können.

Die Busmodule B1, B2, B3,... und die peripheren Module M1, M2, ... sind grundsätzlich gleich aufgebaut. Diese, i.f. Module genannten Teile bestehen empfangsseitig im wesentlichen aus einem optoelektrischen Wandler 4, einem Verstärker 5 sowie einem Schalter 6, der von einer Überwachungsschaltung 7 gesteuert ist. Die Überwachungsschaltung 7 wird bei Anliegen eines konstanten dominanten, hier elektrischen Pegel aktiv.

Wird ein derartiger Pegel erkannt, so wird der Ausgang des Moduls durch den Schalter 6 abgeschaltet. Dieser Fall (dominanter Dauerpegel) tritt beispielsweise dann auf, wenn ein peripheres S/E-Modul M1, ... , Mn beschädigt ist und somit ein Dauer-Lichtsignal an das zugehörige Busmodul weitergibt. Dieses Dauer-Lichtsignal führt dann in diesem Busmodul dazu, dass dessen Ausgang abgeschaltet und damit die elektrische Verbindung zu den anderen Busmodulen unterbrochen wird.

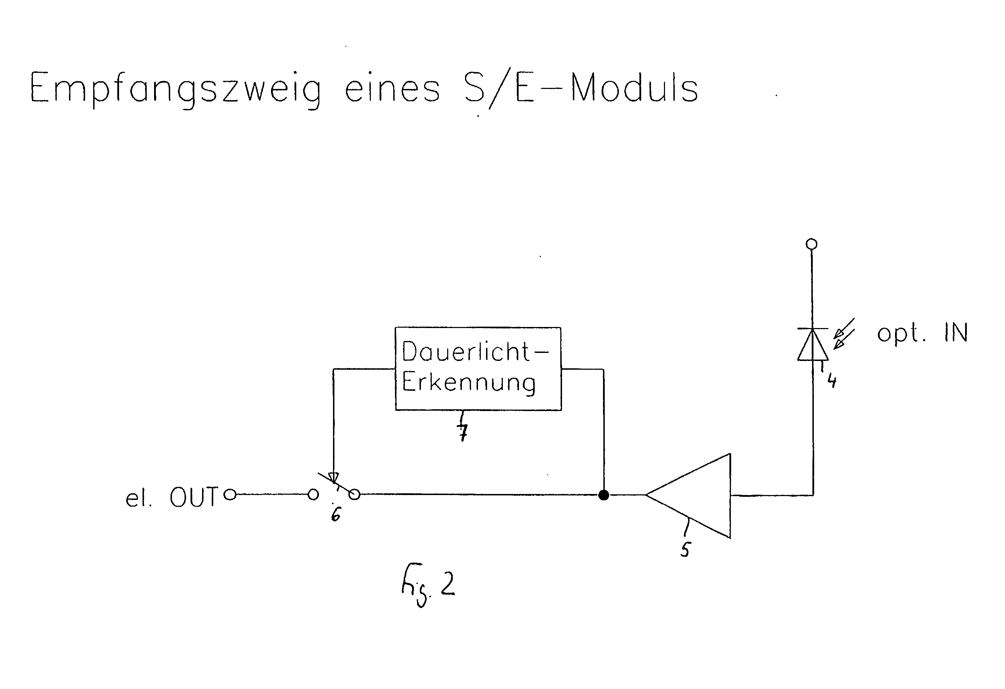

Nicht in Fig. 2 dargestellt ist der Ausgangszweig des Moduls. Dieser besteht im wesentlichen lediglich aus einem elektrisch/optischen Wandler, der das eingehende elektrische Signal in ein entsprechendes optisches Signal umsetzt. Tritt nun der beschriebene Fall ein, so liefert das angesprochene zugehörige Busmodul ein elektrisches Steuersignal mit konstantem Pegel an die anderen Busmodule, die es in ein Dauer-Lichtsignal umsetzen und ihren angeschlossenen peripheren S/E-Modulen zuleiten.

Es kann dann der Fall auftreten, dass der Reihe nach diese peripheren Module ihren Ausgang abschalten und damit die Verbindung zu ihren Teilnehmern unterbrechen, noch bevor die Störung beseitigt, d.h. das defekte S/E-Modul abgeschaltet ist und obwohl diese S/E-Module intakt sind. Um in diesem Fall die intakten S/E-Module zu reaktivieren, kann jedes Busmodul in einer bestimmten Weise ausgestaltet sein. Erhält es an seinem Empfänger 4 kein Dauer-Lichtsignal mehr, so kann es selbsttätig wieder aktiviert werden. Maßgeblich dafür ist ein Zeitmass, innerhalb dessen kein dominanter Licht-Pegel vorliegt. Dies wird durch die Überwachungsschaltung 7 registriert. Es liegt dann nämlich kein elektrischer Dauerpegel mehr vor. Die Überwachungsschaltung schließt den Schalter 6 wieder und das Modul ist wieder uneingeschränkt funktionsfähig, wenn es eingangsseitig einen synchronimpuls erhält.

Der Synchronisationspuls wird von einem Busmaster oder aber auch von einem anderen S/E-Busmodul ausgegeben.

Mit Ausnahmen des gestörten S/E-Modus ist das Gesamtsystem dann wieder uneingeschränkt funktionsfähig.

## Patentansprüche

1. Datenbus für Fahrzeuge mit mehreren Teilnehmern, die über periphere S/E-Module (M1, M2,...) und eine optische Übertragungsstrecke auf einen als Sternkoppler ausgebildeten Zentralbus (1) arbeiten, der zugeordnete und miteinander verbundene S/E-Busmodule (B1, B2,...) besitzt, die mit ihrem opto-elektrischen Wandler (4) ein von einem peripheren S/E-Modul (M1, M2,...) ausgehendes Lichtsignal aufnehmen und als elektrisches Steuersignal über den Zentralbus an die anderen S/E-Busmodule und über diese als Lichtsignal an die zugeordneten peripheren SIE-Module weitergeben, wobei ein S/E-Busmodul (B1, B2,...) bei Auftreten eines Dauerlichtsignals auf der zugehörigen optischen Übertragungsstrecke mit einer Zeitdauer, die größer als die maximal zulässige Signallänge ist, das weiterzugebende elektrische Steuersignal des zugehörigen peripheren S/E-Moduls abschaltet, und wobei innerhalb des Bussystems ein Busmaster vorgesehen ist, der in regelmäßigen Abständen Synchronisationspulse aussendet und das zugehörige periphere S/E-Modul durch Wiedereinschalten des weiterzugebenden elektrischen Steuersignals wieder aktiviert, wenn es eingangsseitig über die Übertragungsstrecke wieder einen Synchronisationspuls erhält.

2. Datenbus nach Anspruch 1, **dadurch gekennzeichnet, dass** die Funktion des Busmasters durch ein separates Bauteil übernommen ist.

3. Datenbus nach Anspruch 1, **dadurch gekennzeichnet, dass** die Funktion des Busmasters durch ein S/E-Busmodul übernommen ist.

## Claims

1. A databus for vehicles with a plurality of nodes which operate via peripheral transmission/receiver modules (M1, M2, ...) and an optical transmission path to a central bus (1) which is configured as a star coupler and has associated transmission/receiver bus modules (B1, B2, ...) which are connected to one another and receive, with their opto-electric converter (4), a light signal emitted from a peripheral transmission/receiver module (M1, M2, ...) and pass it as an electric control signal via the central bus to the other transmission/receiver bus modules and via these as a light signal to the associated peripheral transmission/receiver modules, wherein when a continuous light signal occurs on the associated optical transmission path for a time period greater than the maximum acceptable signal length, an transmission/receiver bus module (B1, B2, ...) switches off the electrical control signal of the associated peripheral transmission/receiver module to be forwarded, and wherein, within the bus system, a bus master is provided which emits synchronisation pulses at regular intervals and reactivates the associated peripheral transmission/receiver module by again switching on the electric control signal to be forwarded if it again receives a synchronisation pulse on the input side via the transmission path.

2. A databus according to claim 1, **characterised in that** the function of the bus master is adopted by a separate component.

3. A databus according to claim 1, **characterised in that** the function of the bus master is adopted by a transmission/receiver bus module.

## Revendications

1. Bus de données pour véhicules avec plusieurs participants, qui travaillent par l'intermédiaire de modules S/E périphériques (M1, M2, ...) et une liaison de transmission optique sur un bus central (1) réalisé sous la forme d'un coupleur en étoile, lequel bus central possède des modules de bus S/E (B1, B2, ...) associés et reliés les uns aux autres, lesquels reçoivent par leur transformateur optoélectrique (4) un signal lumineux émis par un module S/E périphérique (M1, M2, ...) et le retransmettent, d'une part, aux autres modules de bus S/E sous la forme d'un signal de commande électrique par l'intermédiaire du bus central et, d'autre part, aux modules S/E périphériques associés sous la forme d'un signal lumineux par l'intermédiaire des autres modules de bus S/E, un module de bus S/E (B1, B2, ...) arrête le signal de commande électrique à retransmettre provenant du module S/E périphérique associé, lors de l'apparition d'un signal lumineux continu sur la liaison de transmission optique associé d'une durée supérieure à la longueur maximale autorisée du signal, et un bus principal étant prévu à l'intérieur du système de bus, ce dernier émettant des impulsions de synchronisation à intervalles réguliers et activant de nouveau le module S/E périphérique associé en réenclenchant le signal de commande électrique à retransmettre, lorsqu'il reçoit à nouveau côté entrée par la liaison de transmission une impulsion de synchronisation.

2. Bus de données selon la revendication 1,
**caractérisé en ce que**
la fonction de bus principal est prise en charge par un composant distinct.

3. Bus de données selon la revendication 1,
**caractérisé en ce que**
la fonction de bus principal est prise en charge par un module de bus S/E.
